# EUROPEAN PATENT SPECIFICATION

(11) **EP 3 745 491 B1**
(45) Date of publication and mention of the grant of the patent: **11.12.2024**
(21) Application number: 20163238.7
(22) Date of filing: 16.03.2020
(51) Int. Cl.: H01M 10/42, H01M 50/211, H01M 50/572

(54) **BATTERY PACK**
BATTERIEPACK
BLOC-BATTERIE

(30) Priority: 31.05.2019 KR 20190064553
(43) Date of publication of application: 02.12.2020
(73) Proprietor: Samsung SDI Co., Ltd., Gyeonggi-do 17084 (KR)
(72) Inventor: PARK, Sang Hun, Gyeonggi-do (KR)
(74) Representative: Walaski, Jan Filip

(56) References cited:
- EP-A1- 2 328 211
- JP-A- 2003 077 451
- US-A1- 2014 037 994
- US-A1- 2015 147 599

## Description

### BACKGROUND

### 1. Field

The present disclosure relates to a battery pack.

### 2. Description of the Related Art

In general, an electronic device, such as a notebook computer, a mini notebook computer, a net book, a mobile computer, an ultramobile personal computer (UMPC) or a portable multimedia player (PMP), uses a battery pack as a portable power source, and the battery pack may have a plurality of battery cells connected in series and/or in parallel. The battery pack may include a protective circuit module (PCM) for protecting battery cells against over-charge, over-discharge, and/or over-current. The battery cells and the PCM may be housed together in a case. US 2014/037994 describes a secondary battery including a circuit board unnecessitating a cut-out portion. The secondary battery includes a battery cell having a cell tab, a protective circuit module electrically connected to the cell tab and having a circuit pattern formed therein, and a connection tab attached to the protective circuit module and electrically connected to the circuit pattern, wherein the connection tab includes a conductive layer adhered to the protective circuit module and including a first plating layer formed on the conductive layer and a second plating layer formed on the first plating layer, and the cell tab is welded to the connection tab.

### SUMMARY

Embodiments of the present disclosure provide a battery pack which can observe welding quality from its appearance while preventing a circuit board from being damaged when laser beam welding is performed in a state in which a protective circuit module and battery cells are mounted on a frame.

These and other aspects and features of the present disclosure will be described in or will be apparent from the following description of exemplary embodiments of the present disclosure.

According to an aspect of the present disclosure, a battery pack is provided as set out in claim 1, preferred embodiments are defined in dependent claims 2-10.

According to another aspect of the invention, there is provided a method of forming a battery pack as set out in claim 11.

The battery pack according to the present disclosure can prevent a circuit board from being damaged when laser beam welding is performed in a state in which the battery cell and the protective circuit module are mounted in a frame.

In addition, the battery pack according to the present disclosure can inspect welding quality from its appearance during welding of the electrode tab.

### BRIEF DESCRIPTION OF DRAWINGS

FIG. 1 is a perspective view of a battery pack according to an embodiment of the present disclosure.
FIG. 2 is an exploded perspective view of the battery pack shown in FIG. 1**.**
FIG. 3 is an enlarged perspective view illustrating a state in which battery cells, a protective circuit module and a frame are coupled to one another in the battery pack shown in FIG. 1**.**
FIG. 4 is an enlarged perspective view of a battery cell shown in FIG. 2.
FIG. 5 is a cross-sectional view taken along the line 5-5 of FIG. 3.
FIG. 6 is an enlarged perspective view of a battery pack according to another embodiment of the present disclosure.
FIGS. 7A and 7B are cross-sectional views taken along the line 7-7 of FIG. 6.
FIG. 8 is an enlarged perspective view of a battery pack according to still another embodiment of the present disclosure.
FIG. 9 is a plan view illustrating a conductive pattern provided on a protective circuit module shown in FIG. 8 in a state in which a second electrode tab is not coupled to the protective circuit module.

### DETAILED DESCRIPTION

Hereinafter, embodiments of the present disclosure will be described in detail. The subject matter of the present disclosure, however, may be embodied in many different forms and should not be construed as being limited to the example (or exemplary) embodiments set forth herein. Rather, these example embodiments are provided so that this disclosure will be thorough and complete and will convey the aspects and features of the present disclosure to those skilled in the art.

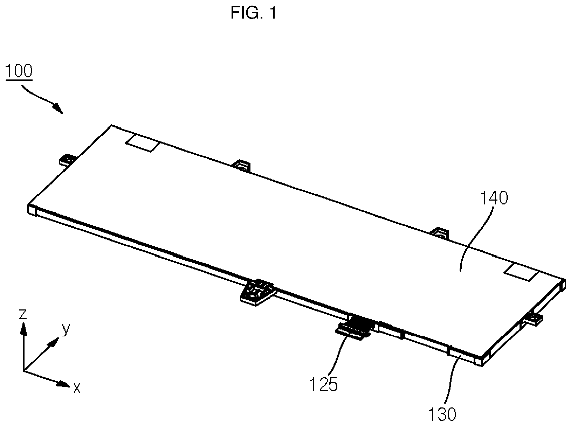

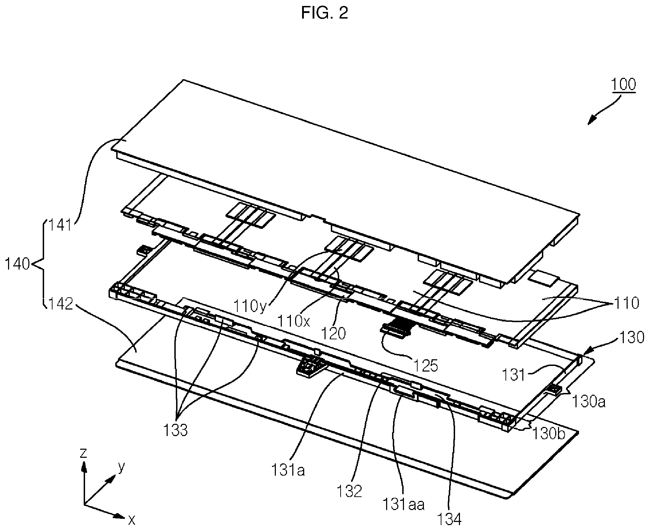

FIG. 1 is a perspective view of a battery pack according to an embodiment of the present disclosure. FIG. 2 is an exploded perspective view of the battery pack shown in FIG. 1.

As shown in FIGS. 1 and 2, the battery pack 100 of the present disclosure may include battery cells 110, a protective circuit module 120 electrically connected to the battery cells 110, a frame 130 accommodating the battery cells no and the protective circuit module 120 together, and a cover 140 covering the battery cells 110, the protective circuit module 120 and the frame 130.

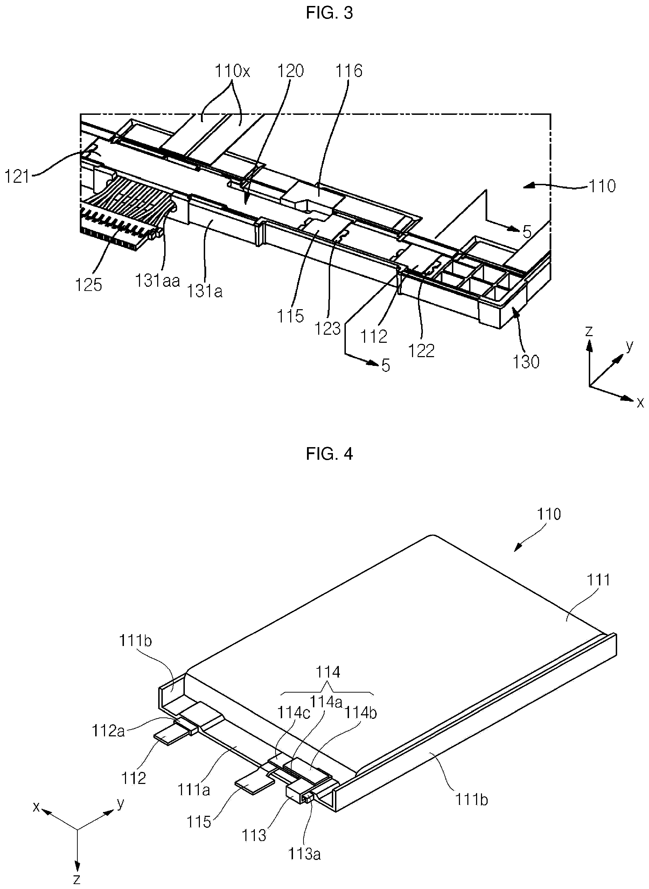

FIG. 3 is an enlarged perspective view illustrating a state in which battery cells, a protective circuit module and a frame are coupled to one another in the battery pack shown in FIG. 1. FIG. 4 is an enlarged perspective view of a battery cell shown in FIG. 2. Hereinafter, a configuration of the battery pack shown in FIGS. 1 and 2 will be described with reference to FIGS. 3 and 4.

Each of the battery cells 110 may be configured such that an electrode assembly (not shown) and an electrolyte (not shown) are accommodated in a case 111. The electrode assembly may be fabricated by stacking a stacked structure having a separator positioned between a positive electrode plate and a negative electrode plate or winding the stacked structure in a jelly-roll configuration. The electrode assembly may be sealed after being accommodated in the case 111 with the electrolyte. The thus configured battery cell 110 may be a pouch-type secondary battery having the electrode assembly accommodated in the pouch-type case 111. The battery cell 110 may include a first electrode tab 112 protruding from a front surface and electrically connected to the negative electrode plate and a second electrode tab 115 spaced a predetermined distance apart from the first electrode tab 112, outwardly protruding from the front surface and electrically connected to the positive electrode plate. For example, the first electrode tab 112 may be a first tab, and the second electrode tab 115 may be a second tab, but aspects of the present disclosure are not limited thereto. Polarities of the first electrode tab 112 and the second electrode tab 115 may be reversed.

The battery cell 110 may have the first electrode tab 112 outwardly extending and protruding through a planar portion 111a provided in the case 111.

The construction of the second electrode tab 115 will be described in detail below, but in essence the second electrode tab 115 comprises a lead plate 115a electrically connected to an electrode tab portion 113 which protrudes through the planar portion 111a but is bent back on itself.

The case 111 may consist of an upper pouch and a lower pouch, which are prepared by folding a rectangular pouch film in a lateral direction x. In addition, the case 111 may have a planar portion 111a and welding portion 111b, which are created by fusing and bonding the upper pouch and the lower pouch.

The welding portions 111b may mean portions extending a predetermined length in the lateral direction x from opposite sides of the case 111 and bent toward the upper pouch to then be adhered and fixed to the side portions of the case 111.

The planar portion 111a may mean a planarly extending portion that outwardly extends in a back-and-forth direction y of the battery cell 110. In addition, the planar portion 111a may be a portion from which the first electrode tab 112 and the electrode tab portion 113 protrude. In addition, insulation tapes 112a and 113a may further be positioned for achieving insulation between the case 111 and the electrode tab portion 113 and between the case 111 and the first electrode tab 112, respectively.

The battery cell 110 may have the electrode tab portion 113 bent twice upward and toward the planar portion 111a so as to be parallel with the planar portion 111a. In addition, an end of the electrode tab portion 113 parallel with the planar portion 111a may be electrically connected to a temperature sensing element 114. Here, the temperature sensing element 114 may be positioned on the planar portion 111a. In addition, the temperature sensing element 114 may include a temperature cut-off element 114a, and a first tab 114b and a second tab 114c electrically connected to opposite sides of the TCO 114a. Here, when a temperature of the battery cell 110 exceeds a reference value, the TCO 114a may operate as a fuse that cuts off current. The temperature sensing element 114 may have the first tab 114b brought into contact with and coupled to the electrode tab portion 113 and the second tab 114c brought into contact with and coupled to a lead plate 115a that is a metal plate that functions as an electrode tab 115 for the purpose of making external connections. Here, the first tab 114b and the second tab 1140 may be a metal or an equivalent thereof. For example, the temperature sensing element 114 may be electrically connected between the electrode tab portion 113 and the lead plate 115a.

In the present disclosure, the temperature sensing element 114 is configured to be connected to the battery cell 110. However, the temperature sensing element 114 may be provided in the protective circuit module 120. Here, the second electrode tab 115 and the first electrode tab 112 of the battery cell 110 may be electrically connected to the protective circuit module 120, respectively.

The lead plate 115a outwardly extends from the planar portion 111a in the back-and-forth direction y to then be substantially parallel with the first electrode tab 112. The lead plate 115a may be made of a metal or an equivalent thereof. The lead plate 115a may be electrically connected to the electrode tab portion 113 through the temperature sensing element 114. In addition, the temperature sensing element 114 and the second electrode tab 113 may be covered by an insulation tape 116 with the planar portion 111a, thereby being fixed and electrically protected. In addition, the lead plate 115a (second electrode tab) and the first electrode tab 112 may be welded to the protective circuit module 120 to then be electrically connected to the protective circuit module 120. In the following description and claims, for the sake of convenient explanation, references to the electrode tabs of the battery cell 110 are references to the first electrode tab 112 and the lead plate 115a, since these are the parts which are coupled to the electrode tab coupling portions 122, 123.

In addition, the battery cell 110 shown in FIG. 4 may be inverted such that the temperature sensing element 114 is positioned under the planar portion 111a, to then be received in the frame 130. The battery cell 110 may be mounted in a cell mount portion 130a of the frame 130.

The battery cell 110 may include a plurality of battery cells 110 mounted in the frame 130 such that side surfaces of adjacent ones of the battery cells 110 are positioned to face each other. Here, since the welding portions 111b are fixed to side portions of the battery cell 110 using a tape 110x, the battery cell 110 can be easily injected or ejected into/from the frame 130. In addition, after the battery cell 110 are mounted in the frame 130, the battery cell 110 may have side portions adhered to top surfaces of adjacent ones of the battery cells 110 so as to facilitate handling, to then be coupled and fixed. Here, opposite side surfaces of each of the battery cells 110 are surfaces fixed at the welding portions 111b using the tape 110x and extending in the back-and-forth direction y. Four battery cells 110 arranged such that side surfaces of two of the four battery cells 120 face each other are shown in FIG. 2, but the present disclosure is not limited to the numbers in the illustrated embodiment. The plurality of battery cells 110 may be positioned sequentially side-by-side in the lateral direction x. For example, one of the battery cells 110 may be positioned such that its side surfaces face its adjacent battery cells 110.

The protective circuit module 120 may be mounted in a module mount portion 130b of the frame 130. The module mount portion 130b may be positioned between a front wall 131a and the cell mount portion 130a in the frame 130. The protective circuit module 120 may be mounted in a module support portion 133 provided in the module mount portion 130b. In addition, the protective circuit module 120, which is shaped of a plate extending in the lateral direction x along the front wall 131a of the frame 130, may be positioned between the front wall 131a of the frame 130 and the battery cell 110 and may have a predetermined width in the back-and-forth direction y. Here, the battery cells 110 may be positioned in the rear of the protective circuit module 120.

The protective circuit module 120 includes the plate-shaped, or planar, circuit board 121 having a plurality of wire patterns. The circuit board 121 shaped of a plate may extend in the lateral direction x along the front wall 131a of the frame 130. In addition, the circuit board 121 may further include a plurality of protection devices (not shown) electrically connected to the plurality of wire patterns. In addition, the protective circuit module 120 may further include electrode tab coupling portions 122 and 123 connected to the opposite-side electrode tabs 112 and 115 of the battery cells 110. The electrode tab coupling portions 122 and 123 may be electrically connected to the wire patterns provided in the circuit board 121. In addition, the electrode tab coupling portions 122 and 123 may electrically connect in series or in parallel each of the plurality of battery cells 110 by the wire patterns provided in the circuit board 121.

In addition, the circuit board 121 may be electrically connected to a connector 125 that is outwardly exposed and protruded. The protective circuit module 120 may be electrically connected to the exterior through the connector 125 and may control charge and discharge operations of the battery cells 110.

The electrode tab coupling portions 122 and 123 to be electrically connected to the battery cells 110 may be mounted on the top surface of the circuit board 121. The electrode tab coupling portions 122 and 123 may include a first electrode tab coupling portion 122 and a second electrode tab coupling portion 123. The circuit board 121 may include a plurality of electrode tab coupling portions 122 and 123 electrically connected to the plurality of battery cells 110, respectively. In addition, the plurality of electrode tab coupling portions 122 and 123 may be positioned to be spaced apart from one another in the lateral direction x. In addition, the plurality of electrode tab coupling portions 122 and 123 are positioned to correspond to the opposite-side electrode tabs 112 and 115 of the battery cells 110.

Here, the first electrode tab coupling portion 122 may be electrically connected to the first electrode tab 112 of the battery cell 110 by laser beam welding, and the second electrode tab coupling portion 123 may be electrically connected to the lead plate 115a (second electrode tab 115) of the battery cell 110 by laser beam welding. Such welding will now be described in detail.

The frame 130 may define assembled positions of the battery cells 110 and the protective circuit module 120. The frame 130 may be made of an insulating material, such as, for example, a polymer compound molded by heat or a pressure. The frame 130 may enclose the battery cells 110 and the protective circuit module 120 positioned within the frame 130 and may include outer walls 131 shaped of a rectangular ring extending in an up-and-down direction z, which is a thickness direction of the frame 130.

The frame 130 may include the module mount portion 130b provided at a region adjacent to the front wall 131a among four outer walls 131 and cell mount portion 130a provided at the rear of the module mount portion 130b. In the frame 130, the cell mount portion 130a and the module mount portion 130b may be provided within a region enclosed by the outer walls 131. The front wall 131a may be a surface having a connector hole 131aa allowing the connector 125 of the protective circuit module 120 to be outwardly exposed and protruded.

Here, both of a top surface and a bottom surface of the frame 130 may be opened on the cell mount portion 130a. In addition, the frame 130 may have a bottom surface 134 on the module mount portion 130b. That is to say, the bottom surface 134 may be provided at a region of the frame 130, which is adjacent to the front wall 131a. In addition, the module support portion 133 upwardly protruding to support the protective circuit module 120 may be provided on the bottom surface 134 of the module mount portion 130b of the frame 130.

The frame 130 may have the bottom surface 134 provided on the module mount portion 130b, which is a region of the front wall 131a. In addition, the module support portion 133 provided in the module mount portion 130b may be brought into contact with a bottom surface of the circuit board 121. Here, the module support portion 133 may have a height smaller than that of the outer walls 131 of the frame 130. The module support portion 133 may include a plurality of module support portions located at a plurality of regions of the module mount portion 130b to support the protective circuit module 120 at a plurality of locations so as to be securely mounted. In addition, the module support portion 133 may further include a rib 132 supporting the circuit board 121 in contact with the bottom surface of the circuit board 121 at a region adjacent to a board throughhole 121a of the circuit board 121. The rib 132 may be provided to withstand a pressure applied when the battery cell 110 and the protective circuit module 120 are welded.

The cover 140 may be installed to cover the top and bottom surfaces of the frame 130 having the battery cells 110 and the protective circuit module 120 mounted thereon. The cover 140 may include an upper cover 141 and a lower cover 142. The upper cover 141 may be coupled to the frame 130 from above so as to cover the top surface of the battery cell 110 and the top surface of the protective circuit module 120. The lower cover 142 may be coupled to the frame 130 from below so as to cover the bottom surface of the battery cell 110 and the bottom surface 134 of the frame 130. The battery cell 110 and the protective circuit module 120 may be accommodated inside the frame 130 and the cover 140. The cover 140 may provide protection for the battery cell 110 and the protective circuit module 120 from external elements and/or environmental exposure.

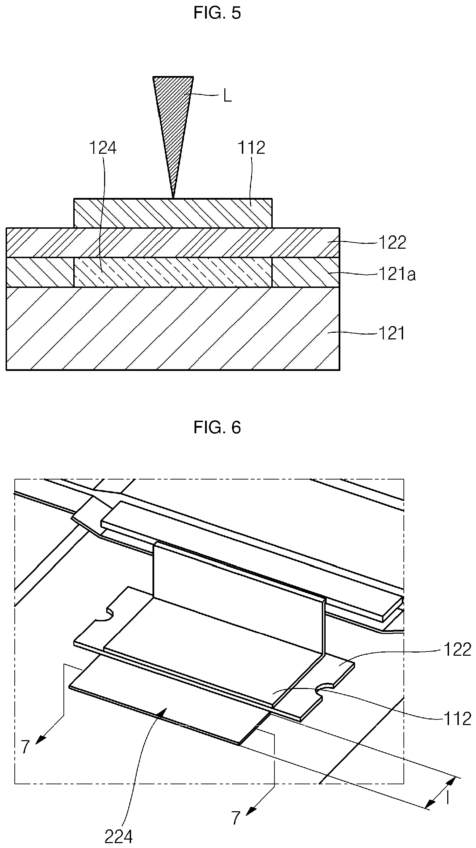

FIG. 5 is a cross-sectional view taken along the line 5-5 of FIG. 3. For brevity, the frame 130 positioned under the protective circuit module 120 is not shown in FIG. 5. However, as described above, the circuit board 121 may be welded to the battery cells 110 in a state in which the battery cells 110 are mounted in the frame 130. Specifically, the rib 132 positioned under the frame 130 may support a bottom portion of the circuit board 121.

The protective circuit module 120 is fixed by connecting the first electrode tab coupling portion 122 onto the circuit board 121 using a conductive adhesion member 121a. Here, the conductive adhesion member 121a may be prepared using a general solder. The conductive adhesion member 121a is provided along edges of a bottom surface, except for a central region, of the first electrode tab coupling portion 122. Accordingly, a space is created between the central region of the first electrode tab coupling portion 122 and the circuit board 121. The protection layer 124 is further be positioned in the space. Specifically, the protection layer 124 may have an area corresponding to the first electrode tab 112 located on the first electrode tab coupling portion 122. Therefore, irrespective of places of the first electrode tab 112, into which laser beam L is irradiated, the circuit board 121 can be covered by the protection layer 124 when performing welding for coupling the first electrode tab 112 to the first electrode tab coupling portion 122 of the circuit board 121. During general laser beam welding, the laser beam L penetrates a material to be welded to then reach the circuit board positioned under the material, causing damage to the circuit board. In the battery pack 100 according to the embodiment of the present disclosure, however, even when the laser beam L for welding the first electrode tab 112 with the first electrode tab coupling portion 122 penetrates into the first electrode tab coupling portion 122, the underlying protection layer 124 may block the laser beam L, thereby preventing the circuit board 121 from being damaged by the laser beam L.

The first electrode tab coupling portion 122 may have a larger area than the first electrode tab 112. Accordingly, the first electrode tab coupling portion 122 can extend more than the first electrode tab 112 on the circuit board 121 to then be exposed. Therefore, when the first electrode tab 112 is mounted on the first electrode tab coupling portion 122 and welding is then performed, it can be visually inspected whether welding is being conducted at an accurate position.

The protection layer 124 may include one or more materials selected from the group consisting of gold, aluminum, iron, platinum, molybdenum, tantalum and chrome, or an alloy thereof, which can be fabricated as a thin film.

In the aforementioned embodiment, for brevity, the protection layer 124 located under a portion where the first electrode tab 112 and the first electrode tab coupling portion 122 are coupled to each other has been shown and described. However, protection layers may also be located under a portion where the second electrode tab 115 (lead plate 115a) and the second electrode tab coupling portion 123 are coupled to each other. In this case, the protection layers may include the same material as the protection layer 124 located under the first electrode tab 112, but may optionally include a different material from the protection layer 124.

Hereinafter, a configuration of a battery pack according to another embodiment of the present disclosure will be described.

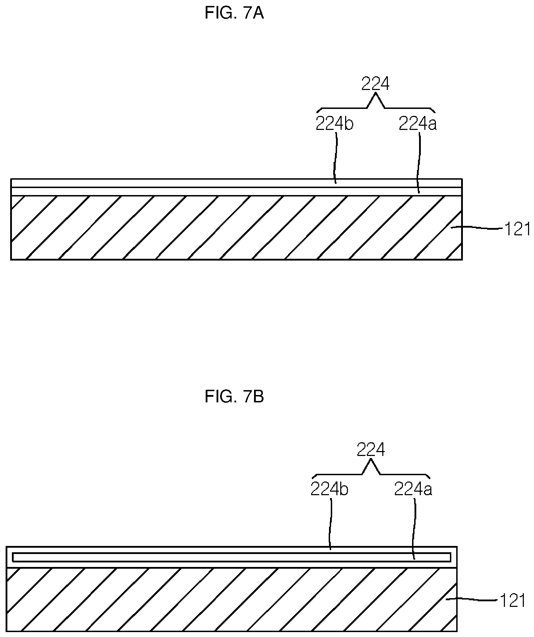

FIG. 6 is an enlarged perspective view of a battery pack according to another embodiment of the present disclosure. FIGS. 7A and 7B are cross-sectional views taken along the line 7-7 of FIG. 6.

The battery pack according to another embodiment of the present disclosure may include a battery cell 110, a protective circuit module 220 electrically connected to the battery cell 110, a frame (not shown) accommodating the battery cell 110 and the protective circuit module 120, and a cover (not shown) covering the battery cell 110, the protective circuit module 220 and the frame.

Referring to FIGS. 6, 7A and 7B, the protective circuit module 220 may include a protection layer 224 further extending from a first electrode tab coupling portion 122 along a surface of the circuit board 121 to then be exposed.

The protection layer 224 may include a first layer 224a for protecting the circuit board 121 from laser beams and a second layer 224b covering the first layer 224a.

The first layer 224a may include the same material as the protection layer 124 according to the previous embodiment of the present disclosure, including, for example, one or more materials selected from the group consisting of gold, aluminum, iron, platinum, molybdenum, tantalum and chrome, or an alloy thereof.

The second layer 224b may cover at least a top surface of the first layer 224a. For example, the second layer 224b located only on the top surface of the first layer 224a is shown in FIG. 7A, and the second layer 224b covering the top and bottom surfaces and side surfaces of the first layer 224a is shown in FIG. 7B. When the second layer 224b covers at least the top surface of the first layer 224a, welding quality can be visually inspected through the exposed second layer 224b. In detail, the second layer 224b may be exposed at an upper portion of the circuit board 121. In addition, the second layer 224b may include a material, the color of which varies according to the temperature. In detail, when laser beam welding is performed by applying laser beams from upper portions of the first electrode tab 112 and the first electrode tab coupling portion 122, heat derived from welding may be transferred to the protection layer 224 positioned under the first electrode tab coupling portion 122, thereby changing the color of the second layer 224b of the protection layer 224. In addition, the operator can visually inspect whether welding has been stably conducted by identifying a change in the color of the second layer 224b. Here, since the laser beam used in the welding is blocked by the first layer 224a, welding quality can be observed through the color change of the second layer 224b without a separate process while preventing the circuit board 121 from being damaged, thereby securing an increased operation speed and reliability.

To achieve this, the second layer 224b may include a thermochromic ink, the color of which varies according to welding heat. In addition, usable examples of the thermochromic ink used for the second layer 224b may include a thermocolor ink, a silk ink or a photo solder resist (PSR) ink. Specifically, the thermocolor ink may be selected from materials changing their colors at a temperature of the protection layer 224 ranging from 30°C to 50°C during laser beam welding.

Specifically, the thermocolor ink is a material having a dielectric constant varied with the temperature, consequently undergoing a change in the displayed color, and may generally be referred to a temperature sensing ink or a chameleon ink. In addition, if the thermocolor ink exists in both of a reversible version or an irreversible version according to whether to revert back to its original color, the reversible thermocolor ink and irreversible thermocolor ink can be both employed as the second layer 224b. In detail, one of three types of ink, including a metallic complex ink, a cholesteric liquid crystal ink, and a Metamo (metamorphosis) color ink, can be used as the reversible ink, and a thermo color ink can be used as the irreversible thermocolor ink. Therefore, if the second layer 224b is prepared by coating the thermocolor ink, the operator can determine that the second electrode tab 112 and the second electrode tab coupling portion 123 have been stably welded to each other based on the color change.

Meanwhile, the silk ink and the PSR ink, which are widely used in the manufacture of a PCB, indicate a white colorant and a green colorant, respectively, and have a particle size of less than 50 µm, making it advantageous to fabricate the second layer 224b as a thin film. However, if the heat applied during laser beam welding is transferred to the silk ink or the PSR ink, a color change may occur. In particular, the inventor of the present disclosure discovered that the color change occurred in a temperature range of between 30°C and 50°C. Therefore, when the second layer 224b is prepared by coating the silk ink or the PSR ink, the color change can be visually observed by the operator, and based on the color change, the operator can determine that the welding between the second electrode tab 112 and the second electrode tab coupling portion 123 has been stably conducted.

In addition, when the second layer 224b is prepared by coating the thermocolor ink, the operator can also determine based on the color change that the welding between the second electrode tab 115 and the second electrode tab coupling portion 123 has been stably conducted.

In addition, in order to allow the operator to easily observe the color change of the second layer 224b, the protection layer 224 can be configured to extend a predetermined length (1) from the second electrode tab coupling portion 123 along the surface of the circuit board 121 to then be exposed.

Here, the extending length (1) of the protection layer 224 may be in a range from 1 mm to 3 mm. If the extending length (1) of the protection layer 224 is greater than or equal to 1 mm, the protection layer 224 is exposed from the second electrode tab coupling portion 123 even if there is a slight misalignment between the second electrode tab coupling portion 123 and the protection layer 224 during welding, thereby allowing the operator to easily observe welding quality by visual inspection. In addition, if the extending length (1) of the protection layer 224 is less than or equal to 3 mm, the heat generated during laser beam welding can be sufficiently transferred to the protection layer 224, thereby ensuring the color change of the protection layer 224 by exposure to the heat.

The extending length (1) of the protection layer 224 is preferably in a range from 1 mm to 2 mm. If the extending length (1) of the protection layer 224 is less than or equal to 2 mm, a color changing effect by the heat derived from laser beams can be enhanced. Therefore, the operator can more easily determine, by visual inspection, that the welding has been stably conducted.

Hereinafter, a battery pack according to still another embodiment of the present disclosure will be described.

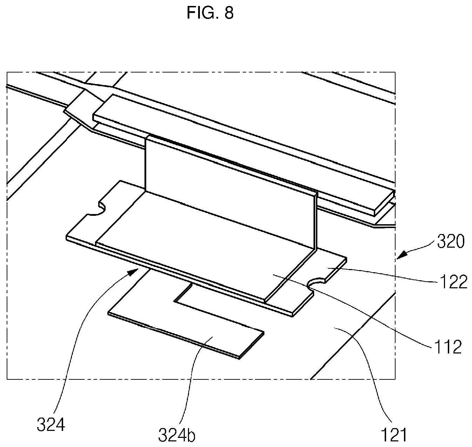

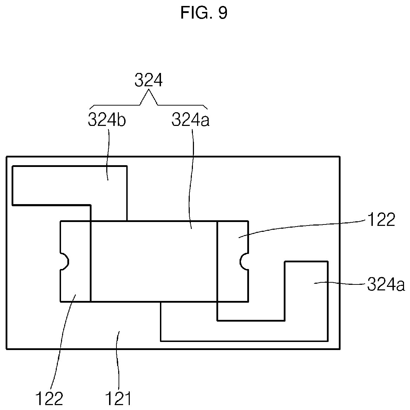

FIG. 8 is an enlarged perspective view of a battery pack according to still another embodiment of the present disclosure. FIG. 9 is a plan view illustrating a conductive pattern provided on a protective circuit module shown in FIG. 8 in a state in which a second electrode tab is not coupled to the protective circuit module.

The battery pack according to still another embodiment of the present disclosure may include battery cells 110, a protective circuit module 320 electrically connected to the battery cell 110, a frame 130 accommodating the battery cell 110 and the protective circuit module 120, and a cover 140 covering the battery cell 110, the protective circuit module 120 and the frame 130.

Referring to FIGS. 8 and 9, the protective circuit module 320 may include a protection layer 324 further extending from a first electrode tab coupling portion 122 along a surface of the circuit board 121 to then be exposed.

The protection layer 324 may include a first layer 324a for protecting the circuit board 121 from laser beams and a second layer 324b extending from the first layer 324a to then be exposed.

The first layer 324a may include the same material as the protection layer 124 according to the previous embodiment of the present disclosure, including, for example, one or more materials selected from the group consisting of gold, aluminum, iron, platinum, molybdenum, tantalum and chrome, or an alloy thereof.

The second layer 324b may include a material, the resistance of which varies according to the heat transferred during laser beam welding. As an example, the second layer 324b may include the same material as the protection layer 124 or the first layer 324a, including, for example, one or more materials selected from the group consisting of gold, aluminum, iron, platinum, molybdenum, tantalum and chrome, or an alloy thereof. As another example, the second layer 324b may include an insulating material, and a PSR ink may be coated on the second layer 324b. As discussed above, the PSR ink, which is widely used in the manufacture of a PCB, has a particle size of less than 50 µm, making it advantageous to fabricate the second layer 324b as a thin film. In addition, not only the color but also the resistance of the PSR ink vary according to the heat generated during welding, the PSR ink can be applied for use in the second layer 324b. Representative usable examples of the PSR ink may include PSR-2000 or PSR-4000 manufactured by Taiyo Ink, Co., Ltd., and R500 Z28 manufactured by Japan OTC.

Therefore, the second layer 324b may include the same material as the first layer 324a or may include a different material from the first layer 324a.

In addition, the second layer 324b may extend from the first layer 324a in at least one direction along the surface of the circuit board 121 to then be exposed. Therefore, the operator can easily determine whether the welding has been stably conducted by measuring the resistance of the exposed second layer 324b.

While the foregoing embodiments have been described to practisee the battery pack of the present disclosure, it will be understood by those of ordinary skill in the art that various changes in form and details may be made therein without departing from the scope of the present invention as defined by the following claims.

## Claims

1. A battery pack (100) comprising:
a protective circuit module (120) including a circuit board (121), an electrode tab coupling portion (122, 123) mounted on a top surface of the circuit board (121), and a protection layer (124, 224, 324) positioned under the electrode tab coupling portion (122, 123);
a conductive adhesive member (121a) arranged on edges of a bottom surface of the electrode tab coupling portion to fix the electrode tab coupling portion to the top surface of the circuit board (121), wherein the conductive adhesive member is not arranged in a central portion of the bottom surface of the electrode tab coupling portion, thereby defining a space between a central region of the electrode tab coupling portion (122) and the circuit board (121) in which the protection layer is arranged, and
a battery cell (110) including an electrode tab (112, 115) protruding at one end, and coupled to a top surface of the electrode tab coupling portion (122, 123) by welding, wherein the protection layer is configured to protect the circuit board from a laser beam during the welding process, and
wherein the electrode tab (112, 115) of the battery cell, and the electrode tab coupling portion (122, 123) and the protection layer (124, 224, 324) of the protective circuit module are stacked and coupled on top of one another.

2. The battery pack of claim 1, wherein the protection layer comprises one or more materials selected from the group consisting of gold, aluminum, iron, platinum, molybdenum, tantalum and chrome, or an alloy thereof.

3. The battery pack of claim 1 or claim 2, wherein the protection layer (224, 324) includes a first portion positioned under the electrode tab coupling portion, and a second portion extending from the first portion along a surface of the circuit board.

4. The battery pack of claim 3, wherein the first and second portion each comprise first and second layers (224a, 224b), wherein the first layer (224a) is arranged on the surface of the circuit board (121) and the second layer (224b) is arranged on the surface of the first layer (224a).

5. The battery pack of claim 4, wherein the second layer (224b) includes a material, the colour of which varies according to the heat transferred during laser beam welding.

6. The battery pack of claim 5, wherein the material comprises one or more selected from a thermocolor ink, a silk ink, and a photo solder resist, PSR, ink.

7. The battery pack of claim 3, wherein the first portion comprises a first layer (324a) and the second portion comprises a second layer (324b) extending from the first layer to be exposed at a surface of the circuit board.

8. The battery pack of claim 7, wherein a surface of the second layer comprises a material, the resistance of which varies according to the heat transferred during laser beam welding, optionally wherein the second layer comprises an insulating material coated with a PSR ink.

9. The battery pack of any one of claims 3 to 8, wherein the second portion extends 2 mm or less from the electrode tab coupling portion.

10. The battery pack of any one of the preceding claims, wherein the protection layer has an area corresponding at least to that of the electrode tab.

11. A method of forming a battery pack that comprises:
a protective circuit module (120) including a circuit board (121), an electrode tab coupling portion (122, 123) mounted on a top surface of the circuit board (121), and a protection layer (124, 224, 324) positioned under the electrode tab coupling portion (122, 123);
a conductive adhesive member (121a) arranged on edges of a bottom surface of the electrode tab coupling portion to fix the electrode tab coupling portion to the top surface of the circuit board (121), wherein
the conductive adhesive member is not arranged in a central portion of the bottom surface of the electrode tab coupling portion, thereby defining a space between central region of the first electrode tab coupling portion (122) and the circuit board (121) in which the protection layer is arranged, and
a battery cell (110) including an electrode tab (112, 115) protruding at one end, and coupled to a top surface of the electrode tab coupling portion (122, 123),
the method comprising stacking the electrode tab on the electrode tab coupling portion and coupling the electrode tab to the electrode tab coupling portion,
wherein coupling the electrode tab to the electrode tab coupling portion comprises welding the electrode tab (112, 115) to the electrode tab coupling portion (122,123) using a laser beam, wherein the protection layer (124, 224, 324) is configured to protect the circuit board (121) from the laser beam.

## Patentansprüche

1. Batteriepack (100), umfassend:
ein Schutzschaltungsmodul (120), das eine Leiterplatte (121), einen auf einer Oberseite der Leiterplatte (121) angebrachten Elektrodenfahnen-Kopplungsabschnitt (122, 123) und eine unter dem Elektrodenfahnen-Kopplungsabschnitt (122, 123) positionierte Schutzschicht (124, 224, 324) enthält;
ein leitfähiges Klebeelement (121a), das an Kanten einer Unterseite des Elektrodenfahnen-Kopplungsabschnitts so angeordnet ist, dass es den Elektrodenfahnen-Kopplungsabschnitt an der Oberseite der Leiterplatte (121) befestigt, wobei das leitfähige Klebeelement nicht in einem zentralen Abschnitt der Unterseite des Elektrodenfahnen-Kopplungsabschnitts angeordnet ist, wodurch ein Raum zwischen einem zentralen Bereich des Elektrodenfahnen-Kopplungsabschnitts (122) und der Leiterplatte (121) eingegrenzt wird, in dem die Schutzschicht angeordnet ist, und
eine Batteriezelle (110), die eine Elektrodenfahne (112, 115) umfasst, die an einem Ende herausragt und durch Schweißen mit einer Oberseite des Elektrodenfahnen-Kopplungsabschnitts (122, 123) gekoppelt ist, wobei die Schutzschicht so konfiguriert ist, dass sie die Leiterplatte während des Schweißvorgangs vor einem Laserstrahl schützt, und
wobei die Elektrodenfahne (112, 115) der Batteriezelle und der Elektrodenfahnen-Kopplungsabschnitt (122, 123) und die Schutzschicht (124, 224, 324) des Schutzschaltungsmoduls übereinander gestapelt und gekoppelt sind.

2. Batteriepack nach Anspruch 1, wobei die Schutzschicht eine oder mehrere Materialien umfasst, ausgewählt aus der Gruppe bestehend aus Gold, Aluminium, Eisen, Platin, Molybdän, Tantal und Chrom oder einer Legierung davon.

3. Batteriepack nach Anspruch 1 oder Anspruch 2, wobei die Schutzschicht (224, 324) einen ersten Abschnitt enthält, der unter dem Elektrodenfahnen-Kopplungsabschnitt positioniert ist, und einen zweiten Abschnitt enthält, der sich vom ersten Abschnitt entlang einer Oberfläche der Leiterplatte erstreckt.

4. Batteriepack nach Anspruch 3, wobei der erste und der zweite Abschnitt jeweils erste und zweite Schichten (224a, 224b) umfassen, wobei die erste Schicht (224a) auf der Oberfläche der Leiterplatte (121) angeordnet ist und die zweite Schicht (224b) auf der Oberfläche der ersten Schicht (224a) angeordnet ist.

5. Batteriepack nach Anspruch 4, wobei die zweite Schicht (224b) ein Material enthält, dessen Farbe je nach der beim Laserstrahlschweißen übertragenen Wärme variiert.

6. Batteriepack nach Anspruch 5, wobei das Material eine oder mehrere der folgenden Substanzen umfasst, ausgewählt aus einer Thermochromtinte, einer Seidentinte und einer lichthärtenden Lötstopptinte (PSR-Tinte).

7. Batteriepack nach Anspruch 3, wobei der erste Abschnitt eine erste Schicht (324a) umfasst und der zweite Abschnitt eine zweite Schicht (324b) umfasst, die sich von der ersten Schicht erstreckt und an einer Oberfläche der Leiterplatte freiliegt.

8. Batteriepack nach Anspruch 7, wobei eine Oberfläche der zweiten Schicht ein Material umfasst, dessen Widerstand je nach der beim Laserstrahlschweißen übertragenen Wärme variiert, wobei optional die zweite Schicht ein mit einer PSR-Tinte beschichtetes Isoliermaterial umfasst.

9. Batteriepack nach einem der Ansprüche 3 bis 8, wobei sich der zweite Abschnitt 2 mm oder weniger vom Elektrodenfahnen-Kopplungsabschnitt erstreckt.

10. Batteriepack nach einem der vorhergehenden Ansprüche, wobei die Schutzschicht eine Fläche aufweist, die mindestens der Fläche der Elektrodenfahne entspricht.

11. Verfahren zum Bilden eines Batteriepacks, umfassend:
ein Schutzschaltungsmodul (120), das eine Leiterplatte (121), einen auf einer Oberseite der Leiterplatte (121) angebrachten Elektrodenfahnen-Kopplungsabschnitt (122, 123) und eine unter dem Elektrodenfahnen-Kopplungsabschnitt (122, 123) positionierte Schutzschicht (124, 224, 324) enthält;
ein leitfähiges Klebeelement (121a), das an Kanten einer Unterseite des Elektrodenfahnen-Kopplungsabschnitts so angeordnet ist, dass es den Elektrodenfahnen-Kopplungsabschnitt an der Oberseite der Leiterplatte (121) befestigt, wobei
das leitfähige Klebeelement nicht in einem zentralen Abschnitt der Unterseite des Elektrodenfahnen-Kopplungsabschnitts angeordnet ist, wodurch ein Raum zwischen dem zentralen Bereich des ersten Elektrodenfahnen-Kopplungsabschnitts (122) und der Leiterplatte (121) eingegrenzt wird, in der die Schutzschicht angeordnet ist, und eine Batteriezelle (110), die eine Elektrodenfahne (112, 115) enthält, die an einem Ende herausragt und mit einer Oberseite des Elektrodenfahnen-Kopplungsabschnitts (122, 123) gekoppelt ist,
wobei das Verfahren das Stapeln der Elektrodenfahne auf dem Elektrodenfahnen-Kopplungsabschnitt und das Koppeln der Elektrodenfahne mit dem Elektrodenfahnen-Kopplungsabschnitt umfasst,
wobei das Koppeln der Elektrodenfahne mit dem Elektrodenfahnen-Kopplungsabschnitt das Schweißen der Elektrodenfahne (112, 115) an den Elektrodenfahnen-Kopplungsabschnitt (122, 123) unter Verwendung eines Laserstrahls umfasst, wobei die Schutzschicht (124, 224, 324) so konfiguriert ist, dass sie die Leiterplatte (121) vor dem Laserstrahl schützt.

## Revendications

1. Bloc-batterie (100) comprenant :
un module de circuit de protection (120) comprenant une carte de circuit imprimé (121), une partie de couplage de languette d'électrode (122, 123) montée sur une surface supérieure de la carte de circuit imprimé (121), et une couche de protection (124, 224, 324) positionnée sous la partie de couplage de languette d'électrode (122, 123) ;
un élément adhésif conducteur (121a) disposé sur les bords d'une surface inférieure de la partie de couplage de languette d'électrode pour fixer la partie de couplage de languette d'électrode à la surface supérieure de la carte de circuit imprimé (121), dans lequel l'élément adhésif conducteur n'est pas disposé dans une partie centrale de la surface inférieure de la partie de couplage de languette d'électrode, définissant de la sorte un espace entre une région centrale de la partie de couplage de languette d'électrode (122) et la carte de circuit imprimé (121) dans laquelle la couche de protection est disposée, et
une cellule de batterie (110) comprenant une languette d'électrode (112, 115) faisant saillie à une extrémité et couplée à une surface supérieure de la partie de couplage de languette d'électrode (122, 123) par soudage, dans lequel la couche de protection est configurée pour protéger la carte de circuit imprimé d'un faisceau laser pendant le processus de soudage, et
dans lequel la languette d'électrode (112, 115) de la cellule de batterie, et la partie de couplage de languette d'électrode (122, 123) et la couche de protection (124, 224, 324) du module de circuit de protection sont empilées et couplées les unes au-dessus des autres.

2. Bloc-batterie selon la revendication 1, dans lequel la couche de protection comprend un ou plusieurs matériaux choisis dans le groupe constitué de l'or, l'aluminium, le fer, le platine, le molybdène, le tantale et le chrome, ou un alliage de ceux-ci.

3. Bloc-batterie selon la revendication 1 ou la revendication 2, dans lequel la couche de protection (224, 324) comprend une première partie positionnée sous la partie de couplage de languette d'électrode, et une seconde partie s'étendant à partir de la première partie le long d'une surface de la carte de circuit imprimé.

4. Bloc-batterie selon la revendication 3, dans lequel la première et la seconde partie comprennent chacune des première et seconde couches (224a, 224b), dans lequel la première couche (224a) est disposée sur la surface de la carte de circuit imprimé (121) et la seconde couche (224b) est disposée sur la surface de la première couche (224a).

5. Bloc-batterie selon la revendication 4, dans lequel la seconde couche (224b) comprend un matériau dont la couleur varie en fonction de la chaleur transférée pendant le soudage par faisceau laser.

6. Bloc-batterie selon la revendication 5, dans lequel le matériau comprend un ou plusieurs éléments sélectionnés parmi une encre thermocolor, une encre de soie et une encre de photo-soudure, PSR.

7. Bloc-batterie selon la revendication 3, dans lequel la première partie comprend une première couche (324a) et la seconde partie comprend une seconde couche (324b) s'étendant à partir de la première couche pour être exposée au niveau d'une surface de la carte de circuit imprimé.

8. Bloc-batterie selon la revendication 7, dans lequel une surface de la seconde couche comprend un matériau dont la résistance varie en fonction de la chaleur transférée pendant le soudage par faisceau laser, éventuellement dans lequel la seconde couche comprend un matériau isolant revêtu d'une encre PSR.

9. Bloc-batterie selon l'une quelconque des revendications 3 à 8, dans lequel la seconde partie s'étend sur 2 mm ou moins à partir de la partie de couplage de languette d'électrode.

10. Bloc-batterie selon l'une quelconque des revendications précédentes, dans lequel la couche de protection comporte une zone correspondant au moins à celle de la languette d'électrode.

11. Procédé de formation d'un bloc-batterie qui comprend :
un module de circuit de protection (120) comprenant une carte de circuit imprimé (121), une partie de couplage de languette d'électrode (122, 123) montée sur une surface supérieure de la carte de circuit imprimé (121), et une couche de protection (124, 224, 324) positionnée sous la partie de couplage de languette d'électrode (122, 123) ;
un élément adhésif conducteur (121a) disposé sur les bords d'une surface inférieure de la partie de couplage de languette d'électrode pour fixer la partie de couplage de languette d'électrode à la surface supérieure de la carte de circuit imprimé (121), dans lequel
l'élément adhésif conducteur n'est pas disposé dans une partie centrale de la surface inférieure de la partie de couplage de languette d'électrode, définissant de la sorte un espace entre la région centrale de la première partie de couplage de languette d'électrode (122) et la carte de circuit imprimé (121) dans laquelle la couche de protection est disposée, et une cellule de batterie (110) comprenant une languette d'électrode (112, 115) faisant saillie à une extrémité, et couplée à une surface supérieure de la partie de couplage de languette d'électrode (122, 123),
le procédé comprenant l'empilement de la languette d'électrode sur la partie de couplage de languette d'électrode et le couplage de la languette d'électrode à la partie de couplage de languette d'électrode,
dans lequel le couplage de la languette d'électrode à la partie de couplage de languette d'électrode comprend le soudage de la languette d'électrode (112, 115) à la partie de couplage de languette d'électrode (122, 123) à l'aide d'un faisceau laser, dans lequel la couche de protection (124, 224, 324) est configurée pour protéger la carte de circuit imprimé (121) du faisceau laser.
